# EUROPÄISCHE PATENTSCHRIFT

(11) **EP 2 465 638 B1**
(45) Veröffentlichungstag und Bekanntmachung des Hinweises auf die Patenterteilung: **14.08.2019**
(21) Anmeldenummer: 11189271.7
(22) Anmeldetag: 16.11.2011
(51) Int. Cl.: B23Q 11/00

(54) **Saugmodul und Handwerkzeugmaschine mit Saugmodul**
Suction module and hand tool machine with suction module
Module d'aspiration et machine-outil manuelle dotée d'un module d'aspiration

(30) Priorität: 20.12.2010 DE 102010063515
(43) Veröffentlichungstag der Anmeldung: 20.06.2012
(73) Patentinhaber: HILTI Aktiengesellschaft, 9494 Schaan (LI)
(72) Erfinder: Luettich, Torsten, 86916 Kaufering (DE); Link, Bernhard, 86986 Schwabbruck (DE); Chen, Henry, 5688 Shanghai City (CN); Wang, Sean, 5688 Shanghai City (CN); Kümmerle, Matthias, 8805 Richterswil (CH)
(74) Vertreter: Hilti Aktiengesellschaft Corporate Intellectual Property

(56) Entgegenhaltungen:
- EP-A1- 1 459 841
- EP-A2- 2 163 363
- WO-A1-2011/073032
- DE-U1-202006 008 068

## Beschreibung

### Technisches Gebiet

Die Erfindung betrifft ein Saugmodul gemäß dem Oberbegriff des Anspruchs 1, wie aus DE 20 2006 008 068 U1 und WO 2011/073032 A1 bekannt. Die Erfindung betrifft des Weiteren eine Handwerkzeugmaschine gemäß Anspruch 14.

### Stand der Technik

Ein solches Saugmodul dient insbesondere zum Absaugen von Staub, Splittern, Spänen, Betonteilen oder anderem Material, welches üblicherweise beim Bearbeiten von Werkstoffen mit einer Handwerkzeugmaschine freigesetzt wird und ohne Absaugung zu Verunreinigungen, zu einer Gesundheitsgefährdung von Arbeitern oder zu Explosionsgefahr führen kann. Häufig wird deshalb das anfallende Material unmittelbar an der Stelle der Bearbeitung durch den Saugkopf abgesaugt.

Abnehmbare Absaugmodule für eine Handwerkzeugmaschine, wie z. B. einen Bohr- oder Kombihammer, sind in der Vergangenheit in verschiedenen Ausprägungen bekannt geworden, darunter solche, denen ein Lüfter- bzw. Gebläserad, ein Filter und eine luftführende - abschnittsweise auch partikelbeladene - Fluidstrecke, in einer Gehäuseeinheit gemeinsam ist. Das Lüfter- bzw. Gebläserad wird durch einen integrierten Motor oder mittels des im Bohr- und Kombihammer befindlichen Motors durch eine Welle-Nabe-Verbindung angetrieben.

Bei genannten Absaugmodulen, auch solchen mit integriertem Motor, sind typischerweise die Drehachsen des Lüfter- bzw. des Gebläserad und des Motors immer parallel zu der Drehachse des Motors im Bohr- und Kombihammer angeordnet.

Weiterhin weisen die heutigen Absaugmodule eine lange Luftstrecke von Bohrloch bzw. der Bohrspitze zum Lüfterrad mit vielen Umlenkungen auf. Die heutigen Absaugmodule blasen nach dem Lüfterrad die Luft ohne nennenswerte Verzögerung in die Umgebung nach außen.

Ein solches Saugmodul ist beispielsweise in EP 120976 A1 gezeigt. Dieses weist einen Saugkopf auf, welcher sich üblicherweise an einer Stelle befindet, an welcher aufgrund Bearbeitung durch ein Handwerkzeuggerät Staub oder dgl. Abraummaterial freigelegt wird. Der Saugkopf ist über einen Saugschlauch mit einem Sauggebläse in einem Sauggehäuse verbunden, welches Luft von dem Saugkopf her abziehen kann. Das Sauggebläse weist eine Drehachse auf, welche in Richtung einer Werkzeugachse der Handwerkzeugmaschine verläuft. Die radiale Ausdehnung des Sauggebläses ist somit durch die Ausdehnung einer Schmalseite des Sauggehäuses begrenzt, was die ebenfalls eine Saugleistung des Sauggebläses beschränkt.

Wünschenswert ist es, eine verbesserte Saugleistung des Sauggebläses bei dennoch angemessen beschränktem Bauraum zu erreichen.

### Darstellung der Erfindung

An dieser Stelle setzt die Erfindung an, deren Aufgabe es ist, ein im Hinblick auf den Stand der Technik verbessertes Saugmodul anzugeben. Insbesondere soll ein Saugmodul für eine verbesserte Saugleistung bei dennoch angemessen beschränktem Bauraum ausgelegt werden.

Die Aufgabe wird durch die Erfindung mittels eines Saugmoduls der eingangs genannten Art gelöst, bei dem erfindungsgemäß die Merkmale des kennzeichnenden Teils des Anspruchs 1 vorgesehen sind.

Gemäß einer Überlegung der Erfindung machen besonders hohe Saugleistungen -das heißt hohe Volumenströme und/oder hoher Unterdruck- bei bestimmten Anwendungen entsprechend dimensionierte, und vor allem effiziente Gebläse und Motoren sowie kurze, strömungsgünstige Luftstrecken erforderlich. In der Regel bedürfen hohe Saugleistungen im Durchmesser größere Gebläseräder oder größere Drehzahlen mit einer effizienten Luftführung nach dem Gebläserad.

Die Erfindung geht weiter von der Überlegung aus, dass die radiale Ausdehnung eines Gebläses im Stand der Technik regelmässig durch die kleinste äußere Abmessung des Sauggehäuses des Saugmoduls begrenzt ist. Die Erfindung geht weiter davon aus, dass bei einer Drehachse eines Gebläserades, die in Richtung einer Werkzeugachse der Handwerkzeugmaschine verläuft insofern eine Schmalseite des Sauggehäuses eine Begrenzung der Saugleistung bedingt. Die Erfindung hat erkannt, dass das Gebläse eine größere radiale Ausdehnung aufweisen kann, wenn eine Gebläseachse des Gebläserades entlang der Schmalachse verlaufend angeordnet ist. Das Konzept der Erfindung hat den Vorteil, dass eine radiale Ausdehnung eines Gebläserades bzw. Gebläses bei einem erfindungsgemäßen Saugmodul praktisch nicht mehr durch einen Raum geringerer Abmessung in Richtung der Schmalachse begrenzt ist. Vielmehr steht gemäss dem Konzept der Erfindung nunmehr für eine radiale Abmessung des Gebläserades ein Raum zur Verfügung, der durch die im Vergleich zum Raum geringerer Abmessung in Richtung der Schmalachse sehr viel grösseren Abmessungen der Seitenflächen des Sauggehäuses vorgegeben ist; d.h. insbesondere ein durch die Abmessungen des Sauggehäuses entlang einer Hochachse und Längsachse vorgegebener grösserer Raum. Vorteilhaft kann ein größeres Gebläse mit einer höheren Saugleistung installiert werden.

Die Schmalachse ist quer zur Längsachse und quer zur Hochachse ausgerichtet, wodurch sie üblicherweise entlang einer Schmalseite des Hauptmoduls verläuft. Die Schmalachse muss nicht zwingend an dem Saugmodul lokalisierbar sein, es handelt sich vielmehr lediglich um eine abstrakte Koordinatenachse. Es ist somit auch nicht zwingend, dass ein Bauteil oder eine Kante des Saugmoduls, abgesehen von der Gebläseachse, parallel zur Schmalachse verläuft.

Durch die Ausrichtung der Gebläseachse parallel zur Schmalachse verläuft die Gebläseachse in üblichen Ausführungen eines Saugmoduls parallel zu einer Schmalseite des Saugmoduls. Eine solche Schmalseite ist insbesondere eine Rückseite, welche eine dem Saugkopf abgewandte Seite bildet. Durch die Lage der Gebläseachse parallel zur Schmalachse kann das Gebläserad soweit ausgedehnt werden, wie es die Abmessungen einer Seitenfläche des Saugmoduls erlauben, welche insbesondere größer ist als die Schmalseite des Saugmoduls. Dies erlaubt es, ein größeres und damit auch leistungsfähigeres Gebläserad zu verwenden.

Das Saugmodul gemäss dem Konzept der Erfindung bietet die Basis für eine besonders kompakte Bauform.

Die Aufgabe wird durch die Erfindung auch mittels einer Handwerkzeugmaschine des anspruchs 14 gelöst, bei der erfindungsgemäß ein Saugmodul gemäss dem Konzept der Erfindung lösbar befestigt ist.

Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Beispielsweise kann die Handwerkzeugmaschine ein Futter aufweisen, in welches ein Werkzeug eingespannt werden kann. Bei einem solchen Werkzeug handelt es sich beispielsweise um einen Bohrer. Ein solcher Bohrer kann typischerweise von der Handwerkzeugmaschine um eine Werkzeugachse drehbar sein, wozu beispielsweise ein Elektromotor oder ein Verbrennungsmotor in der Handwerkzeugmaschine vorgesehen ist.

Der Saugkopf ist insbesondere so konstruiert, dass das drehbare Werkzeug durch den Saugkopf hindurchgeht, was anders ausgedrückt bedeutet, dass Teile des Saugkopfes das drehbare Werkzeug umgeben. Dies ermöglicht eine allseitige Absaugung von Material, welches bei der Bearbeitung eines Werkstücks mit dem drehbaren Werkzeug anfällt. Alternativ kann der Saugkopf jedoch auch als eine einfache Öffnung ausgebildet sein, welche eine zum Absaugen von Material geeignete Form aufweist. Beispielsweise kann eine solche Form ein Schlitz, ein Oval oder ein Kreis sein. In diesem Fall kann der Saugkopf ähnlich wie derjenige eines Staubsaugers ausgebildet sein.

Mittels des Gebläses kann an dem Saugkopf ein Unterdruck erzeugt werden, wodurch Luft durch den Saugkopf eingesaugt werden kann. Damit wird auch Material wie Staub, welches sich in der Nähe des Saugkopfes befindet, mit eingesaugt.

Besonders vorteilhaft ist der Saugkopf mit dem Gebläse durch einen Ansaugkanal verbunden, der in einem ersten Abschnitt entlang, insbesondere parallel, der Längsachse und in einem zweiten Abschnitt entlang, insbesondere parallel, der Hochachse verläuft. Der Ansaugkanal stellt ganz allgemein eine strömungsmäßige Verbindung zwischen dem Saugkopf und dem Gebläse her. Damit kann ein am Gebläse erzeugter Unterdruck zu einem Unterdruck am Saugkopf führen. Außerdem können Luft und Material von dem Saugkopf zu dem Gebläse geleitete werde. In einem ersten Abschnitt verläuft der Ansaugkanal entlang einer Längsachse des Saugmoduls. Eine solche Längsachse ist bei einem bevorzugten Saugmodul diejenige Achse, in welcher das Saugmodul seine größte räumliche Ausdehnung hat. Dies ist jedoch nicht zwingend erforderlich. Die Längsachse kann alternativ beispielsweise auch als eine obere Kante des Saugmoduls definiert werden, wenn das Saugmodul mit einer vorgesehenen Abstellfläche auf einen Untergrund aufgesetzt ist. Jedenfalls verläuft zumindest in dem ersten Abschnitt der Ansaugkanal entlang der Längsachse. Die Hochachse steht quer zur Längsachse, was beispielsweise bedeutet, dass die Achsen annähernd im rechten Winkel zueinander stehen. Beispielsweise stehen die beiden Achsen in einem Winkel von mehr als 45°, mehr als 70°, mehr als 80°, mehr als 85° oder von exakt 90° zueinander. Sofern das Saugmodul derart ausgebildet ist, dass es mit einer Auflagefläche auf einem Untergrund aufsteht und in diesem Zustand oberhalb des Saugmoduls eine Handwerkzeugmaschine befestigt ist, sodass sich das Saugmodul im Wesentlichen zwischen Untergrund und Handwerkzeugmaschine befindet, kann die Hochachse beispielsweise in etwa senkrecht zum Untergrund stehen. Dies bedeutet beispielsweise, dass sie in einem Winkel von mehr als 45°, mehr als 70°, mehr als 80°, mehr als 85° oder von exakt 90° zum Untergrund steht. Jedenfalls verläuft zumindest in dem zweiten Abschnitt der Ansaugkanal entlang der Hochachse.

Der Ansaugkanal kann neben dem ersten Abschnitt und dem zweiten Abschnitt auch weitere Abschnitte aufweisen, welche nicht entlang der Längsachse und der Hochachse verlaufen. Solche Abschnitte können vor dem ersten Abschnitt, zwischen dem ersten Abschnitt und dem zweiten Abschnitt und nach dem zweiten Abschnitt angeordnet sein. Beispielsweise kann zwischen dem ersten Abschnitt und dem zweiten Abschnitt ein gekrümmter Abschnitt angeordnet sein, in welchem der Ansaugkanal seine Richtung ändert. Außerhalb des ersten Abschnitts und des zweiten Abschnitts unterliegt der Ansaugkanal grundsätzlich keinen Beschränkungen in Bezug auf seinen Verlauf.

Im Rahmen einer besonders bevorzugten Weiterbildung ist die Gebläseachse quer, insbesondere senkrecht, zu einer durch einen ersten und zweiten Abschnitt des Ansaugkanals aufgespannten Ebene ausgerichtet ist. Dabei ergibt sich zusätzlich zu den Vorteilen des Konzepts der Erfindung eine besonders vorteilhafte kompakte relative Anordnung von Gebläse und Ansaugkanal.

Bevorzugt weist das Saugmodul ferner einen Motor auf, welcher das Gebläse um die Gebläseachse direkt rotierend antreiben kann. Damit kann sowohl auf ein wartungsanfälliges Getriebe wie auch auf eine komplizierte Verbindung zwischen dem Gebläserad und einem Motor in der Handwerkzeugmaschine verzichtet werden. Alternativ kann das Gebläse jedoch auch von einem Motor im Saugmodul über ein Getriebe oder durch eine Verbindung mit einem Motor in der Handwerkzeugmaschine - entweder mit oder ohne dazwischenliegendem Getriebe - angetrieben werden.

In einer bevorzugten Ausführung ist zwischen dem Ansaugkanal und dem Gebläse ein Filter angeordnet. Ein solcher Filter fängt Staub und anderes Material, zumindest ab einer bestimmten Größe, vor dem Gebläse ab. Dadurch kann eine Beschädigung des Gebläses durch angesaugte Teile, welche eine bestimmte maximale Größe überschreiten, verhindert werden. Außerdem kann damit die Emission von Staubpartikeln in die Umgebungsluft verhindert werden, wodurch beispielsweise eine Gesundheitsgefährdung von Arbeitern oder eine Explosionsgefahr verhindert werden können.

Sofern das Saugmodul einen Motor und einen Filter aufweist, wird der Motor bevorzugt möglichst kurz ausgeführt und die Luft über oder durch den Motor geführt, der zwischen Filter und Gebläserad sitzt. Der Motor kommt damit nur mit besonders feinen, noch nicht vom Filter abgeschiedenen Partikeln in Kontakt.

Bevorzugt ist druckseitig des Gebläses ein Luftkanal angeordnet, welcher seitlich an dem Filter vorbeigeführt wird. Hierdurch wird eine besonders kompakte Bauform ermöglicht.

Bevorzugt handelt es sich bei dem Gebläse um ein Radialgebläse. Damit kann eine besonders gute Sogwirkung erreicht werden. Alternativ kann jedoch auch ein Axialgebläse verwendet werden.

Sofern das Gebläse ein Radialgebläse ist, ist bevorzugt saugseitig des Gebläses ein Krümmer zur axialen Zuführung von Luft angeordnet. Damit wird die aus dem Ansaugkanal herbeiströmende Luft unmittelbar auf das Innere des Gebläserads geleitet, um dann vom Gebläserad radial weggeblasen zu werden. Sofern das Saugmodul einen Filter aufweist, ist dieser bevorzugt stromaufwärts des Krümmers angeordnet.

Das Konzept der Erfindung bietet auch die Basis für eine Bauraum beanspruchende und nunmehr besonders kompakt realisierbare besonders strömungsgünstige Luftführung, z.B. mit einem strömungsgünstig beschaufelten oder unbeschaufelten Diffusor, insbesondere auf einer Druckseite des Gebläses. Der Diffusor kann sich vorteilhaft entweder vollständig oder partiell sowohl radial als auch axial in Bezug auf das Gebläserad ausdehnen, um einen möglichst großen Druckrückgewinn nach dem Gebläserad zu erhalten. Mit einem druckseitigen Diffusor kann ein möglichst großer Druckrückgewinn nach dem Gebläserad erhalten werden. Dabei kann der Diffusor strömungsgünstig beschaufelt oder unbeschaufelt ausgebildet sein. Der Diffusor kann sich entweder vollständig oder partiell sowohl radial als auch axial (in Bezug auf das Gebläserad) ausdehnen. Bevorzugt weitet sich der Diffusor vom Gebläse ausgehend in einer durch die Längsachse und die Hochachse aufgespannten Ebene auf. Der Diffusor weist in diesem Fall eine Bewandung auf, welche zumindest teilweise in der durch die Längsachse und die Hochachse aufgespannten Ebene liegt. Die Schnittlinien der Bewandung des Diffusors mit dieser Ebene weiten sich vom Gebläserad aus gesehen auf. Dies ermöglicht eine kompakte Bauform, insbesondere dann, wenn der Diffusor seitlich des Filters angeordnet ist.

Bevorzugt ist druckseitig des Gebläses eine an einer Schmalseite des Saugmoduls angeordnete Auslassöffnung angeordnet, durch welche Luft von dem Gebläse an eine Umgebung des Saugmoduls abgegeben werden kann. Dies ermöglicht eine besonders kompakte Ausführung und eine Leitung des Abluftstroms an dem Benutzer vorbei.

Sofern das Saugmodul einen Diffusor aufweist, ist dieser bevorzugt zwischen dem Gebläse und der Auslassöffnung angeordnet. Dies kann beispielsweise so realisiert sein, dass ausgehend von dem Gebläse ein Abluftkanal sich kontinuierlich aufweitet und dann an der Schmalseite in die Auslassöffnung mündet.

Vorzugsweise kann eine Handwerkzeugmaschine ein um eine Werkzeugachse drehbares Werkzeug sowie einen entlang einer Griffachse verlaufenden Haltegriff aufweisen, welcher mit einer Hand umfasst werden kann, wobei die Handwerkzeugmaschine mit einem erfindungsgemäßen Saugmodul verbunden ist. Damit kann das Saugmodul Staub oder anderes Material, welches beim Bearbeiten eines Werkstückes mit der Handwerkzeugmaschine anfällt, aus dem Arbeitsbereich absaugen und eine Verschmutzung, eine Gesundheitsgefährdung von Arbeitern oder eine Explosionsgefahr verhindern.

Die Längsachse verläuft in diesem Fall bevorzugt parallel zur Werkzeugachse. Außerdem liegt die Hochachse bevorzugt in einer Ebene mit der Griffachse. Besonders bevorzugt verläuft die Hochachse parallel zur Griffachse. Mit derartigen Ausführungen kann eine besonders kompakte Bauform des Systems aus Handwerkzeugmaschine und Saugmodul erreicht werden.

Bei einer Handwerkzeugmaschine, welche mit einem erfindungsgemäßen Saugmodul verbunden ist, ist das Gebläse bevorzugt auf den von der Handwerkzeugmaschine abgewandten Seiten der Längsachse und der Hochachse in der durch die Längsachse und die Hochachse aufgespannten Ebene angeordnet. Dies bedeutet im Normalfall, dass sich das Saugmodul bei normaler Haltung der Handwerkzeugmaschine unterhalb der Handwerkzeugmaschine befindet, und dass sich der Griff hinter dem Saugmodul befindet.

Bei der Handwerkzeugmaschine handelt es sich beispielsweise um eine Bohrmaschine, einen Bohrhammer oder einen Kombihammer.

### Ausführungsbeispiele

Ein Ausführungsbeispiel der Erfindung wird nun nachfolgend anhand der Zeichnung beschrieben. Diese soll das Ausführungsbeispiel nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der einschränkend wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleicher Bezugszeichen verwendet.

Weitere Vorteile, Merkmale und Einzelheiten der Erfindung ergeben sich aus der nachfolgenden Beschreibung des bevorzugten Ausführungsbeispiels sowie anhand der Zeichnung, wobei
Fig. 1 eine besonders bevorzugte Ausführungsform eines Saugmoduls zeigt;
Fig. 2 in schematischer Form eine besonders bevorzugte Ausführungsform einer Handwerkzeugmaschine mit einem Saugmodul der Fig.1 zeigt.

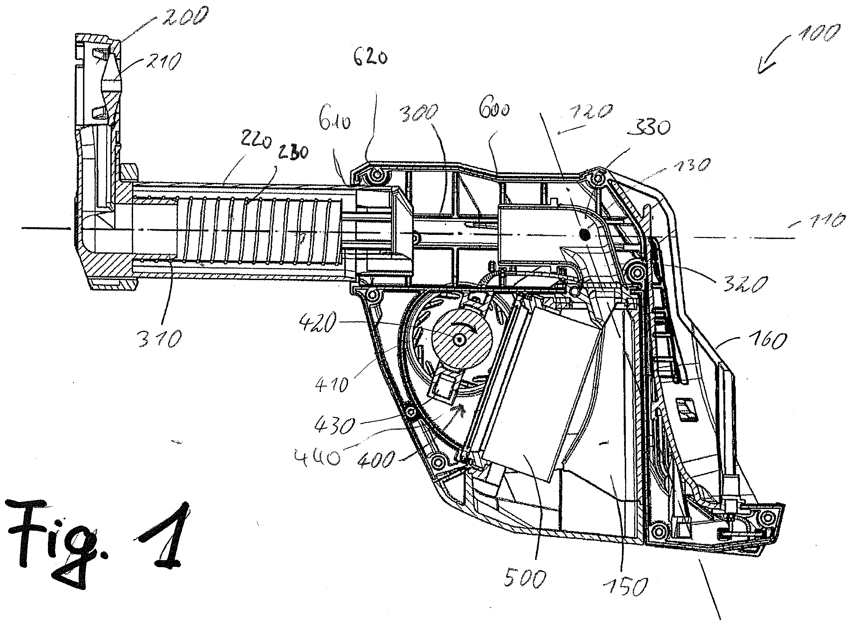

Fig. 1 zeigt ein Saugmodul 100 mit einer Längsachse 110, einer Hochachse 120 und einer Schmalachse 130.

In Arbeitsrichtung an einem werkzeugseitigen Ende des Saugmoduls 100 befindet sich ein Saugkopf 200. Der Saugkopf 200 weist eine Öffnung 210 auf, durch welche ein Werkzeug, beispielsweise ein Bohrer, hindurch gesteckt werden kann. Der Saugkopf 200 kann somit Staub, Material und Partikel, welche beim Bearbeiten eines Werkstücks mit einem durchgesteckten Werkzeug anfallen, aufsaugen. Der Saugkopf 200 ist über einen Ansaugkanal 300 mit einem Gebläse 400 verbunden. Der Ansaugkanal 300 weist einen ersten Abschnitt 310 und einen zweiten Abschnitt 320 auf. Der erste Abschnitt 310 verläuft entlang der Längsachse 110 des Saugmoduls. Der zweite Abschnitt 320 verläuft entlang der Hochachse 120 des Saugmoduls.

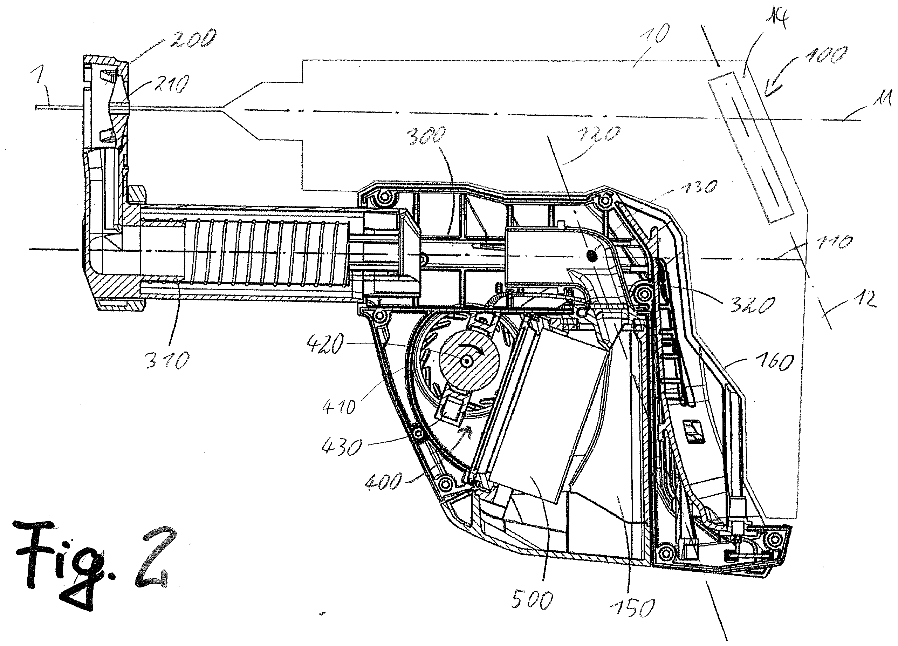

In der vorliegenden Ausführungsform ist der erste Abschnitt 310 des Ansaugkanals teilweise in einem den Saugkopf 200 in Richtung eines Sauggehäuses 600 fortsetzenden Saugkopfgehäuse 220 gebildet und teilweise im Gebläsegehäuse 600 - beide dem ersten Abschnitt 310 bildenden Gehäusebereichs entlang der Längsachse 110 des Sauggehäuses 600. Das Saugkopfgehäuse 220 ist dabei an das Sauggehäuse 600 beweglich entlang der Längsachse 110 angeschlossen. Konkret ist das Saugkopfgehäuse 220 mit seinem länglichen Kanalteil für den ersten Abschnitt 310 des Ansaugkanals 300 in eine Öffnung 610 beweglich eingelassen und dort mit Führungselementen 620 in Richtung der Längsachse 110 geführt. Anders ausgedrückt kann der erste Abschnitt 610 des Ansaugkanals 300 durch die verschiebliche Lagerung des Saugkopfgehäuses 220 im Sauggehäuse 600 verkürzt oder verlängert werden. Eine Verkürzung oder eine Verlängerung kann je nach Bedarf eines Anwenders eingestellt werden bzw. stellt sich automatisch ein, wenn -wie aus Fig. 2 ersichtlich- ein Werkzeug 1 in einen Untergrund gedrückt wird und damit auch der Saugkopf 200 am Untergrund anliegend mit dem Saugkopfgehäuse 220 in das Gebläsegehäuse 600 gedrückt wird. Um einen sicheren Halt des Saugkopfes 200 auf dem Untergrund zu gewährleisten, ist das Saugkopfgehäuse 220 vorliegend gegen die Federkraft einer Feder 230 verschiebbar vorgespannt; wird also mit anderen Worten durch die Federkraft ständig mit dem Saugkopf 200 auf den Untergrund gedrückt. Je nach Bearbeitungslänge des Werkzeugs 100 stellt sich somit eine Länge des ersten Abschnitts 310 des Ansaugkanals 300 während des Bearbeitungsvorganges ein. Die weitere Führung von Ansaugluft im Ansaugkanal 300 erfolgt vorliegend über einen Umlenkbereich 330 des Ansaugkanals 300 in den zweiten Abschnitt 320. Der Umlenkbereich 330 stellt vorliegend einen Winkel zwischen dem ersten Abschnitt 310 und dem zweiten Abschnitt 320 von in etwa 90° -vorliegend etwas mehr als 90°, nämlich 110°- ein. Nach dem Umlenkbereich 330 wird die angesaugte Luft im zweiten Abschnitt 320 zu einem Filter 500 geführt.

Durch die vorliegende Anordnung der Gebläseachse 420 des Gebläserades 410 parallel zur Schmalachse 130 des Sauggehäuses 600 kann eine vergleichsweise große Erhöhung einer Saugleistung realisiert werden, die mit bisher bekannten Absaugmodulen nicht realisierbar ist. Dabei wird mit der vorliegenden Ausführungsform eines Saugmodules 100 der Fig. 1 vermieden, dass sich die Außenabmessungen des Sauggehäuses 600 über die schlankeste Seite der in Fig. 2 als Bohr- und Kombihammer dargestellten Handwerkzeugmaschine 10 hinaus erstrecken müsste. Gemäß dem Konzept der Erfindung ist für das Gebläserad 410 in radialer Erstreckung sowie den Ansaugkanal 300 zusammen eine Anordnung gefunden werden, die sich entlang der größeren Abmessungen des Sauggehäuses 600 erstreckt, nämlich entlang der Längsachse 110 und der Hochachse 120. Dazu ist gemäß dem Konzept der Erfindung die Gebläseachse 420 entlang, vorliegend parallel, der Schmalachse 130 des Sauggehäuses 600 verlaufend angeordnet. Insbesondere ist vorliegend bei einem Saugmodul 100 die Gebläseachse 420 des Gebläserades 410 zum einen von einem integrierten Motor 430 direkt angetrieben, der auf der Gebläseachse 420 sitzt - das heißt die Gebläseachse 420 stimmt im Wesentlichen mit der Motorachse überein und wird vom Motor 430 als Motorwelle direkt angetrieben. Zum anderen sitzt die Gebläseachse 420 des Saugmodules 100 vorliegend quer zu einer Querachse des Motors einer in Fig. 2 gezeigten Handwerkzeugmaschine 10. Damit verläuft die Gebläseachse 420 auch entlang der Schmalachse 130 der Handwerkzeugsmaschine 10. Außerdem ist gemäß der vorliegenden Ausführungsform die Anordnung eines Filters 500 unmittelbar vor dem Eingang des Gebläses 400 möglich. Der Filter 500 ist zwischen dem zweiten Abschnitt 320 des Ansaugkanals 300 und dem Gebläse 400 angeordnet, durch welchen die aus dem Ansaugkanal strömende Luft hindurchtritt, bevor sie in das Gebläse eintritt. Damit können gröbere Teilchen, welche das Gebläse beschädigen könnten, aus dem Luftstrom entfernt werden. Außerdem können Staubteilchen ab der Porengröße des Filters ebenso aus dem Luftstrom entfernt werden, wodurch eine Gesundheitsgefährdung von Arbeitern oder eine Explosionsgefahr verhindert werden können.

Von dem Filter 500 aus tritt der Luftstrom axial auf ein Gebläserad 410 des Gebläses 400. Es handelt sich vorliegend um ein Radialgebläse, so dass Luft axial angesaugt werden muss. Das Gebläse dreht sich im Betrieb um eine Gebläseachse 420, wobei es von einem Motor 430 angetrieben wird. Der Motor 430 ist vorliegend ein Elektromotor.

Die Gebläseachse 420 verläuft parallel zur Schmalachse 130. Dadurch erstreckt sich das Gebläserad 410 in radialer Richtung entlang einer breiten Seite 150 des Saugmoduls 100. Die Abmessung des Gebläserads 410 kann praktisch entlang der vergleichsweise großen Ausdehnung der breiten Seite 150 vorgesehen sein.

Die Schmalachse 130 verläuft vorliegend parallel zur äußeren Begrenzung einer Schmalseite 160 des Saugmoduls 100. Die Schmalseite 160 ist dafür ausgebildet, dass daran eine Handwerkzeugmaschine 10, wie beispielsweise eine Bohrmaschine, ein Bohrhammer oder ein Kombihammer auf das Saugmodul 100 aufgesteckt und lösbar fest befestigt wird.

Durch die Anordnung des Motors 430 und des auf gemeinsamer Drehachse -Gebläseachse 420- liegenden Gebläserades 410 kann das Gebläserad und eine an das Gebläserad sich anschließende, druckseitige Luftführung seitlich an der saugseitigen Luftführung und am Filter 500, bspw. einer herausnehmbaren Box, vorbeigeführt werden. Die Abmessungen des Gebläserades 410 und der sich anschließenden druckseitigen Luftführung sind nicht mehr durch das kleinste Abmaß des Bohr- bzw. Kombihammers bestimmt, sondern vielmehr nun von einer Fläche begrenzt, die durch die Länge des Schlagwerks und des Griffes 14 aufgespannt wird. Letztere erlaubt weitaus größere Lüfterrad- bzw. Gebläsedurchmesser und größere druckseitige Luftführungen, die es ermöglichen, die aus dem Gebläse austretende Luft zu verzögern.

Weiterhin gelangt man durch die besondere Anordnung von Filter 500, Motor 430 und Gebläserad 410 zu einer kompakten, das Gehäusevolumen des Sauggehäuses 600 minimierenden Anordnung, die sich zum einem durch kürzere saugseitige Luftstrecken zum Filter 500 bzw. dem Gebläserad 410 und zum anderen nur wenig scharfe Umlenkungen auszeichnet. Hierdurch -wie auch durch eine möglichst stetige Luftführung- können Strömungsverluste erheblich minimiert werden.

Weiterhin kann die druckseitige Luftführung in Form eines strömungsgünstig beschaufelten oder unbeschaufelten Diffusors 440 ausgebildet werden, der sich, entweder vollständig oder partiell, sowohl radial als auch axial -in Bezug auf das Gebläserad 410 - ausdehnen kann, um einen möglichst großen Druckrückgewinn nach dem Gebläserad 410 zu erhalten; dies bei sehr kompakter Bauform.

Idealerweise wird der Motor 430 möglichst kurz ausgeführt und die Luft über bzw. durch den Motor 430 geführt, der zwischen Filter 500 und Gebläserad 410 sitzt. Der Motor 430 kommt damit nur mit ultrafeinen, noch nicht vom Filter 500 abgeschiedenen, Partikeln in Kontakt.

Fig. 2 zeigt mit entsprechendem Vorteil versehen ein System aus einer Handwerkzeugmaschine 10 mit einem ein Sauggehäuse 600 aufweisenden Saugmodul 100. Das Saugmodul 100 ist derart an der Handwerkzeugmaschine 10 lösbar befestigt, dass die Längsachse 110 des Sauggehäuses 600 entlang -vorliegend parallel- der Werkzeugachse 11 des Werkzeugs 1 verläuft und die Hochachse 120 des Sauggehäuses 600 in einer Ebene mit der Griffachse 12 des Griffs 14 liegt; nämlich vorliegend entlang, das heißt hier parallel, der Griffachse 12 verläuft. Das Saugmodul 100 ist mittels des Sauggehäuses 600 in einer durch die Werkzeugachse 11 und der Griffachse 12 aufgespannten Ebene angeordnet. Vorliegend ist das Sauggehäuse 600 gdazu unter und vor der Handwerkzeugmaschine 10 befestigt; anders ausgedrückt, sitzt die Handwerkzeugmaschine 10 seitlich oberhalb des Saugmodules 100. Konkret liegt vorliegend die vorgenannt aufgespannte Ebene in Arbeitsrichtung der Werkzeugachse 11 unterhalb der Werkzeugachse 11 liegt und entgegen der Arbeitsrichtung vor der Griffachse 12.

## Patentansprüche

1. Saugmodul (100), das mit einer Handwerkzeugmaschine (10) lösbar fest verbindbar ist, aufweisend:
- einen Saugkopf (200), zum Aufnehmen eines um eine Werkzeugachse (11) drehbaren Werkzeugs (1) für die Handwerkzeugmaschine (10),
- ein Sauggehäuse (600) mit einem zum Ansaugen von Luft aus dem Saugkopf (200) ausgebildeten Gebläse (400), das eine um eine Gebläseachse (420) drehbares Gebläserad (410) aufweist, wobei
- das Sauggehäuse (600) eine zu der Werkzeugachse (11) parallele Längsachse (110) und eine quer zur Längsachse (110) stehende Hochachse (120) aufweist sowie eine Schmalachse (130) geringerer Abmessung, die quer zur Längsachse (110) und quer zur Hochachse (120) ausgerichtet ist, **dadurch gekennzeichnet, dass**
die Gebläseachse (420) entlang, insbesondere parallel, der Schmalachse (130) verlaufend angeordnet ist.

2. Saugmodul (100) nach Anspruch 1, **dadurch gekennzeichnet, dass** der Saugkopf (200) mit dem Gebläse (400) durch einen Ansaugkanal (300) verbunden ist, der in einem ersten Abschnitt (310) entlang, insbesondere parallel, der Längsachse (110) und in einem zweiten Abschnitt (320) entlang, insbesondere parallel, der Hochachse (120) verläuft.

3. Saugmodul (100) nach Anspruch 1 oder 2, **dadurch gekennzeichnet, dass** die Gebläseachse (420) quer, insbesondere senkrecht, zu einer durch einen ersten und zweiten Abschnitt (310, 320) des Ansaugkanals (300) aufgespannten Ebene ausgerichtet ist.

4. Saugmodul (100) nach einem der vorhergehenden Ansprüche, **dadurch gekennzeichnet, dass** das Sauggehäuse (600) einen Motor (430) enthält, welcher das Gebläserad (410) um die Gebläseachse (420) rotierend direkt antreibbar angeordnet ist.

5. Saugmodul (100) nach Anspruch 4, **dadurch gekennzeichnet, dass** die Gebläseachse (420) gemeinsame Achse des Motors (430) und des Gebläserades (410) ist.

6. Saugmodul (100) nach einem der vorhergehenden Ansprüche, **dadurch gekennzeichnet, dass** ein Filter (500) zwischen dem zweiten Abschnitt (320) des Ansaugkanals (300) und dem Gebläse (400) angeordnet ist.

7. Saugmodul (100) nach einem der vorhergehenden Ansprüche, **dadurch gekennzeichnet, dass** eine Zuführung von Saugluft zwischen Filter (500) und Gebläse (400) über den Motor (430) erfolgt.

8. Saugmodul (100) nach einem der vorhergehenden Ansprüche,
wobei das Gebläse (400) als ein Radialgebläse gebildet ist und auf einer Saugseite des Gebläses (400) ein Krümmer angeschlossen ist, der zur axialen Zuführung von Saugluft, insbesondere aus dem Filter (500), ausgebildet ist.

9. Saugmodul (100) nach Anspruch 8, **dadurch gekennzeichnet, dass**
ein auf einer Druckseite des Gebläses (400) angeschlossener Auslasskanal auf dem Raum geringerer Abmessung der Schmalachse (130) seitlich am Filter (500) vorbeigeführt ist.

10. Saugmodul (100) nach Anspruch 9, **dadurch gekennzeichnet, dass** der Filter (500) in einer auswechselbaren Gehäusebox angeordnet ist.

11. Saugmodul (100) nach einem der vorhergehenden Ansprüche, **dadurch gekennzeichnet, dass** auf der Druckseite des Gebläses (400) ein zum Auslasskanal führender Diffusor (440) angeschlossen ist, dessen Querschnitt sich in einer vom Gebläse (400) ausgehenden und in Richtung einer Auslassrichtung zum Auslasskanal aufweitet wobei die Auslassrichtung in einer durch die Längsachse (110) und die Hochachse (120) aufgespannten Ebene liegt.

12. Saugmodul (100) nach Anspruch 11, **dadurch gekennzeichnet, dass** der Diffusor (440) unbeschaufelt ist.

13. Saugmodul (100) nach einem der vorhergehenden Ansprüche, **dadurch gekennzeichnet, dass** auf einer Druckseite des Gebläses (400) eine an der Schmalseite (160) des Sauggehäuses (600) angeordnete Auslassöffnung des Auslasskanals angeordnet ist, durch welche Luft von dem Gebläse (400) an eine Umgebung des Saugmoduls (100) abgebbar ist.

14. Handwerkzeugmaschine (10) mit einem ein Sauggehäuse (600) aufweisenden Saugmodul (100) nach einem der Ansprüche 1 bis 13, aufweisend:
- eine Werkzeugaufnahme (13) zur Aufnahme eines um eine Werkzeugachse (11) drehbaren Werkzeugs (1),
- einen entlang einer Griffachse (12) verlaufenden handhabbaren Griff (14), **dadurch gekennzeichnet, dass**
die Längsachse (110) des Sauggehäuses (600) entlang, insbesondere parallel, der Werkzeugachse (11) verläuft und die Hochachse (120) des Sauggehäuses (600) in einer Ebene mit der Griffachse (12) liegt.

15. Handwerkzeugmaschine nach Anspruch 14 **dadurch gekennzeichnet, dass** die Hochachse (120) entlang, insbesondere parallel, der Griffachse (12) verläuft.

16. Handwerkzeugmaschine nach Anspruch 14 oder 15 **dadurch gekennzeichnet, dass** das Saugmodul (100) mittels dem Sauggehäuse (600) in einer durch die Werkzeugachse (11) und der Griffachse (12) aufgespannten Ebene angeordnet ist, die in Arbeitsrichtung der Werkzeugachse (11) unterhalb derselben und entgegen der Arbeitsrichtung vor der Griffachse (12) liegt.

## Claims

1. Suction module (100), which may be connected firmly to a hand machine tool (10) in a detachable way, having:
- a suction head (200) for holding a tool (1) for the hand machine tool (10) that may turn around a tool axis (11),
- a suction casing (600) with a fan (400) made for drawing in air from the suction head (200), which has an impeller (410) that may turn around a fan axis (420), in which
- the suction casing (600) has a longitudinal axis (110) parallel to the tool axis (11) and a vertical axis (120) crosswise to the longitudinal axis (110) as well as a narrow axis (130) of smaller size, which is aligned crosswise to the longitudinal axis (110) and crosswise to the vertical axis (120), **characterised in that**
the fan axis (420) is arranged running along, particularly parallel to, the narrow axis (130).

2. Suction module (100) according to claim 1, **characterised in that** the suction head (200) is connected to the fan (400) through an intake duct (300), which in a first section (310) runs along, particularly parallel to, the longitudinal axis (110) and in a second section (320) runs along, particularly parallel to, the vertical axis (120).

3. Suction module (100) according to claim 1 or 2, **characterised in that** the fan axis (420) is aligned crosswise, particularly perpendicular, to a plane formed by a first and second section (310, 320) of the intake duct (300).

4. Suction module (100) according to one of the previous claims, **characterised in that** the suction casing (600) contains a motor (430), which is arranged so that it may drive the impeller (410) directly rotating around the fan axis (420).

5. Suction module (100) according to claim 4, **characterised in that** the fan axis (420) is a common axis of the motor (430) and the impeller (410).

6. Suction module (100) according to one of the previous claims, **characterised in that** a filter (500) is arranged between the second section (320) of the intake duct (300) and the fan (400).

7. Suction module (100) according to one of the previous claims, **characterised in that** suction air is supplied between the filter (500) and the fan (400) via the motor (430).

8. Suction module (100) according to one of the previous claims,
in which the fan (400) is made as a radial fan and an elbow is connected to a suction side of the fan (400), which is made for the axial supply of suction air, particularly from the filter (500).

9. Suction module (100) according to claim 8, **characterised in that**
an outlet duct connected to a pressure side of the fan (400) is led sideways past the filter (500) to the area of smaller size of the narrow axis (130).

10. Suction module (100) according to claim 9, **characterised in that** the filter (500) is arranged in an exchangeable casing box.

11. Suction module (100) according to one of the previous claims, **characterised in that** a diffusor (440) leading to the outlet duct is connected to the pressure side of the fan (400), the cross section of which expands in a direction going out from the fan (400) in an outlet direction to the outlet duct, in which the outlet direction is in a plane formed by the longitudinal axis (110) and the vertical axis (120).

12. Suction module (100) according to claim 11, **characterised in that** the diffusor (440) is vaneless.

13. Suction module (100) according to one of the previous claims, **characterised in that** on a pressure side of the fan (400) an outlet opening of the outlet duct is arranged on the narrow side (160) of the suction casing (600), through which air may be released from the fan (400) to the surroundings of the suction module (100).

14. Hand machine tool (10) with a suction module (100) having a suction casing (600) according to one of claims 1 to 13, having:
- a tool holder (13) for holding a tool (1) that may turn around a tool axis (11),
- a handy grip (14) running along a grip axis (12), **characterised in that**
the longitudinal axis (110) of the suction casing (600) runs along, particularly parallel to, the tool axis (11) and the vertical axis (120) of the suction casing (600) lies in a plane with the grip axis (12).

15. Hand machine tool according to claim 14, **characterised in that** the vertical axis (120) runs along, particularly parallel to, the grip axis (12).

16. Hand machine tool according to claim 14 or 15, **characterised in that** the suction module (100) is arranged by means of the suction casing (600) in a plane formed by the tool axis (11) and the grip axis (12), which lies below it in the working direction of the tool axis (11) and in front of the grip axis (12) counter to the working direction.

## Revendications

1. Module d'aspiration (100) pouvant être fixé à une machine-outil manuelle (10) de manière amovible, comportant :
- une tête d'aspiration (200) pour recevoir un outil (1) pouvant tourner autour d'un axe d'outil (11) de la machine-outil manuelle (10),
- un carter d'aspiration (600) muni d'une soufflante (400) conçue de manière à aspirer de l'air à partir de la tête d'aspiration (200), laquelle soufflante comporte une roue de soufflante (410) pouvant tourner autour d'un axe de soufflante (420),
- dans lequel le carter d'aspiration (600) a un axe longitudinal (110) parallèle à l'axe d'outil (11) et un axe vertical (120) transversal à l'axe longitudinal (110), ainsi qu'un axe étroit (130) de plus petite dimension, lequel axe étroit est disposé transversalement à l'axe longitudinal (110) et transversalement à l'axe vertical (120), **caractérisé en ce que**
l'axe de soufflante (420) est agencé en s'étendant le long de l'axe étroit (130), en particulier parallèlement à celui-ci.

2. Module d'aspiration (100) selon la revendication 1, **caractérisé en ce que** la tête d'aspiration (200) est reliée à la soufflante (400) par un canal d'aspiration (300) qui s'étend dans une première partie (310) le long de l'axe longitudinal (110), en particulier parallèlement à celui-ci, et dans une seconde partie (320) le long de l'axe vertical (120), en particulier parallèlement à celui-ci.

3. Module d'aspiration (100) selon la revendication 1 ou 2, **caractérisé en ce que** l'axe de soufflante (420) est aligné transversalement, en particulier perpendiculairement, à un plan défini par une première et une seconde partie (310, 320) du canal d'aspiration (300).

4. Module d'aspiration (100) selon l'une des revendications précédentes, **caractérisé en ce que** le carter d'aspiration (600) contient un moteur (430) qui est agencé de manière à pouvoir entraîner directement la roue de soufflante (410) en rotation autour de l'axe de soufflante (420).

5. Module d'aspiration (100) selon la revendication 4, **caractérisé en ce que** l'axe de soufflante (420) est un axe commun du moteur (430) et de la roue de soufflante (410).

6. Module d'aspiration (100) selon l'une des revendications précédentes, **caractérisé en ce qu'**un filtre (500) est agencé entre la seconde partie (320) du canal d'aspiration (300) et la soufflante (400).

7. Module d'aspiration (100) selon l'une des revendications précédentes, **caractérisé en ce que** le moteur (430) assure une alimentation en air aspiré entre le filtre (500) et la soufflante (400).

8. Module d'aspiration (100) selon l'une des revendications précédentes,
dans lequel la soufflante (400) est formée comme une soufflante radiale et un coude est adjacent à un côté aspiration de la soufflante (400), lequel coude est conçu pour l'alimentation axiale en air aspiré, en particulier à partir du filtre (500).

9. Module d'aspiration (100) selon la revendication 8, **caractérisé en ce qu'**un canal de sortie adjacent au côté refoulement de la soufflante (400) passe latéralement par le filtre (500) dans l'espace de plus petite dimension de l'axe étroit (130).

10. Module d'aspiration (100) selon la revendication 9, **caractérisé en ce que** le filtre (500) est agencé dans un boîtier de carter remplaçable.

11. Module d'aspiration (100) selon l'une des revendications précédentes, **caractérisé en ce qu'**un diffuseur (440) menant au canal de sortie est raccordé au côté refoulement de la soufflante (400), la section du diffuseur s'élargissant à partir de la soufflante (400) et dans une direction de sortie vers le canal de sortie, dans lequel la direction de sortie se situe dans un plan défini par l'axe longitudinal (110) et l'axe vertical (120) .

12. Module d'aspiration (100) selon la revendication 11, **caractérisé en ce que** le diffuseur (440) est dépourvu de pales.

13. Module d'aspiration (100) selon l'une des revendications précédentes, **caractérisé en ce qu'**une ouverture de sortie du canal de sortie agencée sur le côté étroit (160) du carter d'aspiration (600) est agencée sur le côté refoulement de la soufflante (400), ouverture à travers laquelle de l'air provenant de la soufflante (400) peut être fourni à un environnement du module d'aspiration (100).

14. Machine-outil manuelle (10) munie d'un module d'aspiration (100) comportant un carter d'aspiration (100) selon l'une des revendications 1 à 13, comportant :
- un porte-outil (13) pour recevoir un outil (1) pouvant tourner autour d'un axe d'outil (11),
- une poignée (14) pouvant être tenue à la main et s'étendant le long d'un axe de préhension (12), **caractérisée en ce que**
l'axe longitudinal (110) du carter d'aspiration (600) s'étend le long de l'axe d'outil (11), en particulier parallèlement à celui-ci, et l'axe vertical (120) du carter d'aspiration (600) se situe dans un plan avec l'axe de préhension (12).

15. Machine-outil manuelle selon la revendication 14, **caractérisée en ce que** l'axe vertical (120) s'étend le long de l'axe de préhension (12), en particulier parallèlement à celui-ci.

16. Machine-outil manuelle selon la revendication 14 ou 15, **caractérisée en ce que** le module d'aspiration (100) est agencé au moyen du carter d'aspiration (600) dans un plan défini par l'axe d'outil (11) et l'axe de préhension (12), lequel plan se situe dans une direction de travail de l'axe d'outil (11) sous celui-ci et dans la direction opposée à la direction de travail avant l'axe de préhension (12).
